# EUROPEAN PATENT APPLICATION

(11) **EP 1 179 795 A1**
(43) Date of publication of application: **13.02.2002**
(21) Application number: 00306216.3
(22) Date of filing: 21.07.2000
(51) Int. Cl.: G06F 17/60, B64F 5/00

(54) **A method of modelling a maintenance system**

(71) Applicant: BAE SYSTEMS plc, Farnborough, Hampshire GU14 6YU (GB)
(72) Inventor: The designation of the inventor has not yet been filed
(74) Representative: Edis, Ronald Malcolm

(57) **Abstract**

A method of modelling a maintenance system, the method comprising; providing a computer system having a component database and a reliability database; inputting, to the component database, component data relating to the status of one or more components to be maintained as part of the maintenance system; inputting, to the reliability database, reliability data relating to the predicted performance of at least one component represented by the component data in the component database; and computing, in accordance with a predefined relationship between the component and reliability data, output data representing a maintenance prediction relating to said at least one of the components.

## Description

This invention relates to a method of modelling a maintenance system, and particularly, although not exclusively, to a method of modelling a maintenance system for an aircraft fleet. The invention also relates to a maintenance modelling system.

Many classes of manufactured equipment require a comprehensive maintenance system to keep the equipment running safely and efficiently and such systems often need detailed planning. Whilst planning usually involves the specifying of a regular scheduled service programme, the inevitable occurrence of unscheduled maintenance operations must also be allowed for. As an example, in the aircraft industry, the occurrence of an unscheduled maintenance operation often results in an aircraft being unable to fly for a period, this being known as an 'Aircraft on Ground' condition (AOG). This has obvious disadvantages for an aircraft operator in terms of interruption of services and cost. Accordingly, advance planning is necessary to ensure that correct repair services and/or replacement components are made available to the operator as soon as possible, so that equipment 'down-time' is kept to a minimum. Such planning is also necessary to ensure that the aircraft operator is not burdened with the high expense involved in purchasing and storing all possible replacement components, most of which are unlikely to be needed frequently.

Maintenance systems are increasingly being handled by third party companies, i.e. companies other than the manufacturer and the operator. Taking again the example of the aircraft industry, aircraft operators having a fleet of aircraft will often employ the services of a specialist maintenance company to supply continuous support in terms of components and storage. The planning of a maintenance system is important when it comes to bidding for new maintenance systems (which are usually open for tender). Preparation of a bid includes component stock levels and the associated purchase and storage costs, and estimating when they will be required.

Conventionally, devising a maintenance system involves mainly manual calculation based on a number of generalised input variables, such as the contract length, and the number of pieces of equipment to be included in the contract. The whole process may take many weeks to complete, and if any input variable changes, either lengthy recalculation is necessary or accuracy is compromised by relying largely on the original calculations.

According to a first aspect of the present invention, there is provided a method of modelling a maintenance system, the method comprising: providing a computer system having a component database and a reliability database; inputting, to the component database, component data relating to the status of a plurality of components to be maintained as part of the maintenance system; inputting, to the reliability database, reliability data relating to the predicted performance of at least one component represented by the component data in the component database; and computing, in accordance with a predefined relationship between the component and reliability data, output data representing a maintenance prediction relating to at least one of the components.

Storage of component data and reliability data in databases provides a flexible way of modelling a maintenance system. It will be appreciated that a 'database' may be a set of data of a particular category, and that it may be stored in any form together with or separate from another database comprising another set of data of a particular category. The maintenance prediction represented by the output data typically represents the predicted time or times at which a particular component will require some form of maintenance, be it a simple test, check, or more complex operation. Since the output data (which will comprise the maintenance model) is computed on the basis of a predefined relationship between data elements within these databases, any variation or change made to one or more of the data elements will automatically be reflected elsewhere within the model. The predicted performance typically relates to the likelihood of the component needing checking or testing to ensure its ability to meet its required operational standards within a predetermined time period. In addition to this increased flexibility, the accuracy of the output data is maintained since the new computation is based on the same predefined relationship as was used in the original calculation. In other words, the new computation is a totally new calculation, and not simply an alteration of the previous set of output data. In any event, the initial computation will take only a matter of seconds to complete, with any updated computation taking a similarly short time to complete. The modelling process may be applied 'in-house', i.e. to model an organisation's own maintenance system, for example, as part of a streamlining exercise. Alternatively, the process may be used in preparing a bid for a third party organisation's maintenance programme.

Preferably, the method further comprises providing a project database, and inputting project data associated with one or more parameters defining the maintenance system, to the project database. The project database will hold project data typically relating to parameters defining particular maintenance requirements of an organisation. For example, the project data may specify the length of the contract, the equipment to be maintained, and associated financial information. By changing these parameters and observing the generated output data, it is possible to assess the impact or outcome of a whole number of possible maintenance scenarios.

Preferably, the reliability database comprises two or more sub-sets of reliability data, with the step of computing the project data including accessing only one of the reliability data sets in accordance with a predetermined hierarchical rule. One sub-set of the reliability database may comprise estimated reliability data, with a further sub-set comprising empirical reliability data for one or more components represented in the component data. Accordingly, the accuracy of the model generated can be optimised by means of accessing a preferred sub-set of data from a plurality of sources. For example, the most accurate source of reliability data is generally considered to be empirical data (i.e. measured or observed data) obtained from the operator's own equipment. In the absence of this data, empirical data from a very similar setup (a so-called 'clone operation') might be considered as the preferred source of reliability data. A further source of reliability data might relate to that established for the world fleet of that aircraft, this reliability data usually being provided by the aircraft manufacturer. Last in the hierarchy might be the estimated reliability data provided by the Original Equipment Manufacturer (OEM) of the component concerned. By specifying the hierarchy as part of the computer system, the most preferred source of reliability data will be used in computing the maintenance system model.

The computed output data may be outputted to an output database in the form of a maintenance schedule, that is, a schedule relating to the predicted time at which one or more of the components represented in the component database will require maintenance. This offers particular technical advantages in that the model provides a tool for determining which components to stock, and at what times during the system lifetime to actually stock them. The output data may also take into account components which are currently in stock, and the levels of stock available, i.e. to provide support for additional aircraft.

Preferably, the method further comprises providing a component cost database, and inputting cost data, relating to the cost of maintaining and/or storing one or more components represented in the component database, to the component cost database. The component cost database may comprise two or more sub-sets of cost data, with the step of computing the output data including accessing only one of the cost data sets in accordance with a predetermined hierarchical rule. For example, one sub-set of data may indicate the cost of buying a new component from the OEM, with a second sub-set indicating the cost of buying a re-furbished component from an alternative market source.

The component cost database may comprise sub-sets relating to mutually exclusive maintenance operations, and statistical data relating to the likelihood of each maintenance operation being required, the step of computing the output data including performing a cost calculation based on the likelihood of each maintenance operation being required. For example, one sub-set might relate to the cost of checking a component and finding a 'No-Fault Found' (NFF) condition, another sub-set might relate to the cost of repairing a component, and a further set might relate to the cost of checking a component and deciding that it is 'Beyond Economic Repair' (BER). Accordingly, the cost involved in the maintenance of a particular component may be calculated on the basis of the likelihood of these three events occurring.

By providing the component cost data, a maintenance schedule may be computed and outputted to the output database, including not only the predicted time at which one or more of the components represented in the database will require maintenance, but also the associated cost required to maintain and/or store the components over the course of a maintenance term. This cost aspect is particularly useful when using the model to formulate a bid for a maintenance contract. Not only will the bidding party be able to demonstrate the predicted maintenance levels and required components to be maintained at particular times, they will also be able to demonstrate the associated costs involved. This cost data could be incorporated into a fully integrated financial application associated with the computer system for providing a detailed breakdown of expenditure over the lifetime of the contract, as well as cash flow, profit and loss etc.

The method may further comprise providing an updated maintenance system model including updated component, reliability and/or component cost data to the computer system during a period of time. This provides a means of inputting data of increased accuracy to any of the databases of the computer system, as soon as the data becomes available. In effect, a data feedback facility is provided in order to optimise the system. The modelling method may therefore be used to 'streamline' a maintenance system during its actual lifetime. The updated data may be downloaded from a remote source by means of a network link, e.g. the Internet. For example, an OEM may download estimated reliability from its own computer system for use in the modelling method.

The component data may include data relating to the current age of one or more of the components represented in the component database, with the reliability data including data relating to the predicted age or age offset at which one or more of the components will require maintenance.

According to a second aspect of the present invention, there is provided a computer program stored on a computer usable medium, the computer program comprising an application including a component database and a reliability database, the application further comprising computer readable instructions for causing the computer to execute the steps of: prompting a user to enter component data relating to the status of one or more components to be maintained as part of a maintenance system; prompting a user to enter reliability data, associated with at least one component represented in the component database, to the reliability database; and computing, in accordance with a predefined relationship between the component and reliability data, output data relating to the predicted maintenance of at least one of the components.

According to a third aspect of the present invention, there is provided a maintenance modelling system, comprising a computer having a processing means, and an application program stored on a memory of the computer, wherein the application program includes: a component database for storing component data relating to the status of one or more components to be maintained as part of a maintenance system; and a reliability database for storing reliability data relating to the predicted performance of at least one component represented by the component data in the component database, the processing means being arranged to compute, in accordance with a predefined relationship between the component and reliability data, output data relating to the predicted maintenance of at least one of the components.

Preferred features of the above mentioned system are described in the appended claims.

It will be appreciated that 'maintenance' operations, in the context of the description, refers not only to repair and overhaul operations, but also to complete component replacement operations. It will also be appreciated that the modelling method may be applied to any maintenance system which involves the maintenance of repairable or replaceable components. In the case of the preferred embodiment, a method and system for modelling an aircraft maintenance system is described.

The invention will now be described, by way of example, with reference to the drawings in which:
Figure 1 is a block diagram showing the operation of an application program for modelling a maintenance system in accordance with the invention;
Figure 2 shows a project database as incorporated in the application program of Figure 1;
Figure 3 shows a component database as incorporated in the application program of Figure 1;
Figure 4 shows a component cost database as incorporated in the application program of Figure 1;
Figure 5 shows a reliability database as incorporated in the application program of Figure 1;
Figure 6 is a block diagram showing, in detail, the operation of an output database incorporated in the application program of Figure 1;
Figure 7 shows an "If buy" database as incorporated in the output database;
Figure 8 shows a "Qbuy" database as incorporated in the output database; and
Figure 9 shows a "When buy" database as incorporated in the output database.

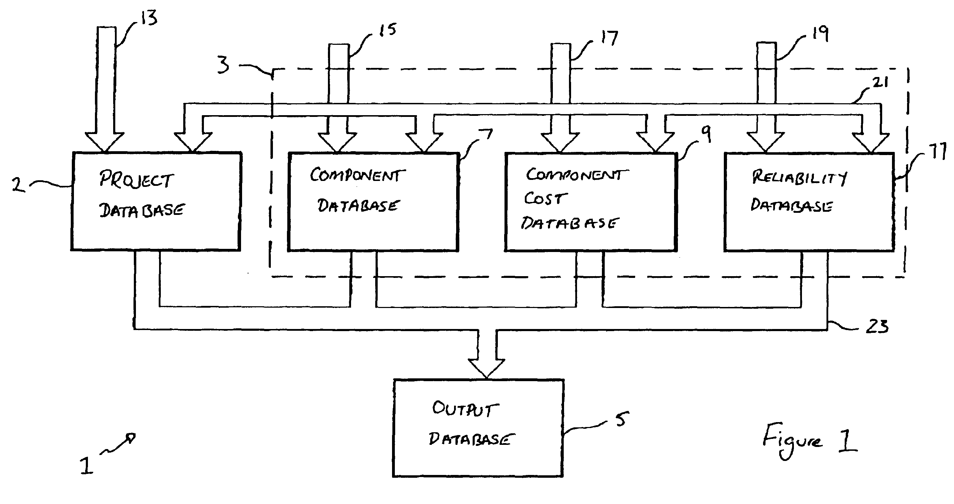

Referring to Figure 1, an application program 1 for modelling an aircraft fleet maintenance system comprises a project database 2, a master database 3 and an output database 5. The master database 3 comprises three separate databases, namely a component database 7, a component cost database 9, and a reliability database 11.

As will be explained below, the application program 1 effectively provides a tool for modelling a maintenance system over a period of time. The application program 1 generates a model in the form of a maintenance schedule which relates to the recommended stock levels of particular components and dates when they should be acquired. The maintenance schedule also generates the predicted costs involved in maintaining the components over the course of the maintenance system's duration, including an analysis of cash flow, profit and loss. Accordingly, it will be appreciated that the application program can be used to model a future maintenance system, to streamline an existing maintenance system, and to act as a tool for generating a bid for a future maintenance contract.

The application program 1 is stored and executed on a computer system, e.g. a conventional PC (not shown). When executed on the computer system, the application program 1 enables data to be input to each of the databases 2, 7, 9, 11 by means of a conventional input device, e.g. a keyboard, or, as will be explained below, by means of a data download operation over a computer network. In Figure 1, the data input means to each of the databases 2, 7, 9, 11, is represented by the arrows 13, 15, 17, 19 respectively.

At the software level, the application program 1 is constructed using a conventional spreadsheet program, such as Microsoft Excel. As an alternative, a relational database could be used. As will be understood by those skilled in the art, a spreadsheet package enables the convenient construction of separate databases by means of defining a number of separate database tables. Data input is also facilitated. Each database table is formed in a grid system, with separate data elements making up the database 'data' entered in so-called 'cells'. Each cell, and so each data element, is represented by a unique cell label. Numeric characters represent data row labels, and alphabetically-ordered letters represent column labels. Thus, a cell label for a particular cell will comprise a row-column label. Each of the databases 2, 5, 7, 9, 11 comprising the application program 1 are formed as separate database tables within the spreadsheet program.

As will become clear below, some data elements within the project, component, component cost and reliability databases 2, 7, 9, 11 are linked to other data elements within other databases in accordance with a predefined relationship. In Figure 1, this data link facility is represented by the arrow 21. Such a predefined relationship may comprise a simple mathematical relationship, such as addition, subtraction, multiplication or division between data elements within databases, but may also include a more complex relationship, such as a boolean, logical or statistical function. At the most basic level, data may simply be shared between databases. Thus, for example, a number of data elements stored within the databases 2, 7, 9, 11 may also be stored within one or more of those other databases.

Data stored within the project, component, component cost and reliability databases 2, 7, 9, 11 is used to compute, or calculate, output data which is stored in the output database 5. The data channel representing this storing operation is shown as an arrow 23. In a manner similar to that described above, computation of data elements within the output database 5 is based on a number of predefined relationships between data elements within the project, component, component cost, reliability and the output databases 2, 7, 9, 11, 5. The so-called output data in the output database 5 is that which ultimately forms the maintenance model.

In general, commercially available spreadsheet programs provide a facility whereby a functional relationship may be defined between different cells or groups of cells. It is this facility which is used to specify the different predefined relationships between different cells or groups of cells within the databases 2, 5, 7, 9, 11, by which the application program 1 computes the output data for storing in the output database 5. By specifying these predefined relationships, new data which is entered in any of the project, component, component cost or reliability databases 2, 7, 9, 11 will be reflected elsewhere in the model.

The project, component, component cost and reliability databases 2, 7, 9, 11, and the data contained therein will now be explained in detail.

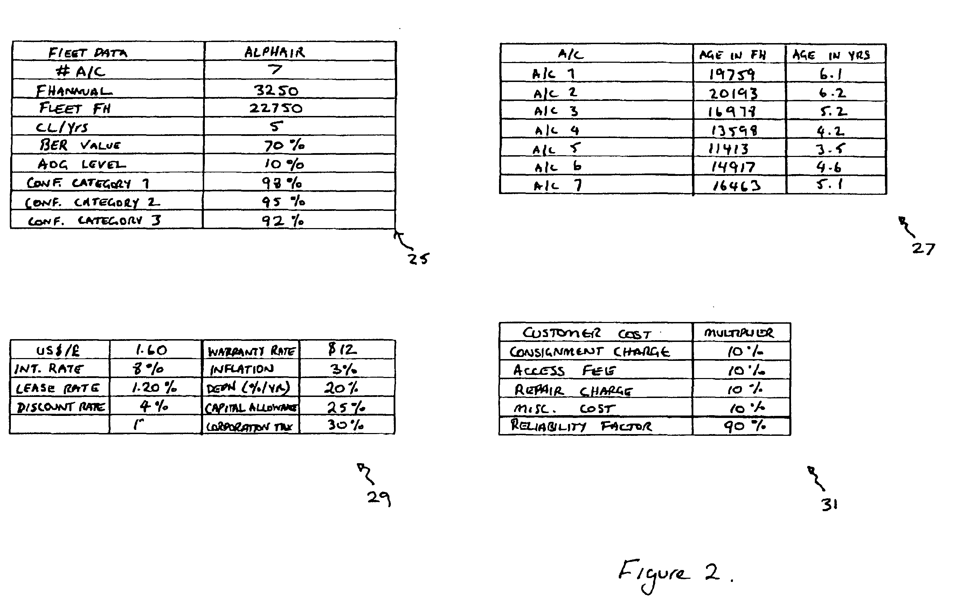

Referring to Figure 2, the project database 2 is shown. The project database 2 is used to store so-called 'project data'. This project data is used to define various parameters relating to the maintenance requirements and associated financial information. For example, if the application program 1 is used to prepare a bidding tool for a maintenance contract, the aircraft operator will specify various contract parameters which are entered in the project database 2. The project database 2 itself comprises a number of sub-databases, namely a contract database 25, a fleet definition database 27, a financial database 29 and a cost markup database 31.

The contract database 25 stores the following data (reading from top to bottom): Fleet data (the fleet name); #A/C (the number of aircraft to be incorporated in the model); FHannual (the average annual number of flying hours per aircraft); Fleet FH (total number of flying hours for the fleet); CL/yrs (the contract length in years); BER Value (Beyond Economic Repair value, i.e. the percentage of the total component cost for which the repair cost is considered not economically viable); the AOG level (Aircraft on Ground level), this being expressed as the percentage of demand on the system allowed for by the maintenance operator (in a given year) for components to be classified as AOG items (AOG items are those which are to be acquired as a matter of urgency in order to make the aircraft operational); and confidence category levels (the required confidence level of having a particular category of component in stock when a maintenance operation is required. Three categories, i.e. categories 1 to 3 are defined).

The fleet definition database 27 defines the actual name of all aircraft to be incorporated in the model, and their associated age in flying hours and years.

The financial database 29 defines a number of variable parameters which will be used by the application program 1 in constructing a fully detailed financial analysis based on cost information in the model. These parameters are: US$/£ (i.e. the current exchange rate); the current interest rate; a lease rate; a discount rate; a warranty rate; the current rate of inflation; the current depreciation rate; the capital allowance rate and the corporation tax rate.

The cost markup database 31 includes data relating to the maintenance operator's multiplier (given in terms of a percentage) which will be applied to all calculated cost related data in order to provide the maintenance operator's actual uplift. In this example, different multiplier's are specified for different cost types. A reliability factor is also specified, which is a 'factor of safety' for use in determining when to order particular components in relation to when they are actually expected to require maintenance.

It will be appreciated that other forms of project, or contract -related data may be incorporated in the project database 2. Ultimately, it provides the interface between the actual aircraft operator and the application program 1.

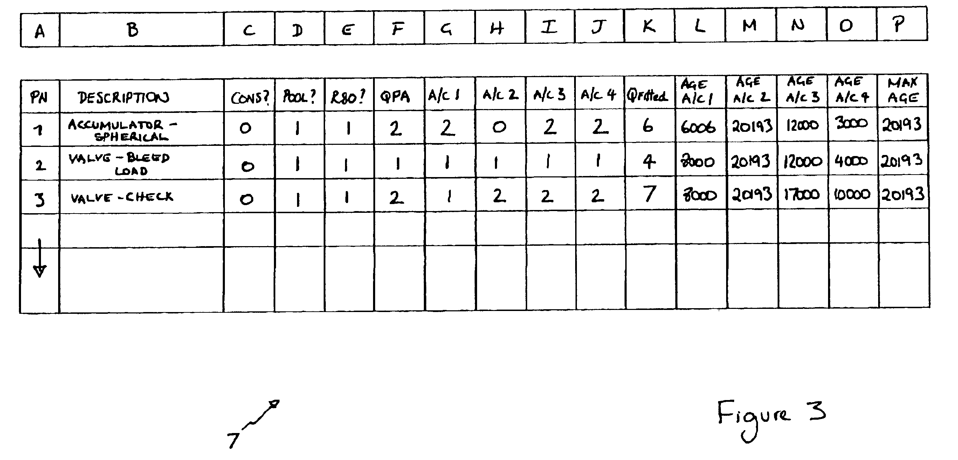

Referring now to Figure 3, the component database 7 is shown. In general, the component database 7 is used to store details of all components which are to be maintained as part of a maintenance system. In this example, details relating to only thrce aircraft components are included in the component database 7. In practice, however, it will be appreciated that details of thousands of different components may be stored. Details of the data stored in the component database 7 is described with reference to the appropriate column label.

In column A, the part number for each component is specified, e.g. PN1, PN2 etc. All data cells in this column are linked to the component cost database 9 and the reliability database 11 such that data corresponding to these part numbers is stored alongside the appropriate part number. In column B, the description of each part is specified.

In columns C and D, data relating to the type of storage facility to be employed for each component is given. In this case, two different storage facility types are catered for. Firstly, if the airline operator wishes to have a component stored in a special consignment pool for its own exclusive use, then this is indicated by a "1" in column C. A "1" in column D indicates that a part should be stored in a central pool, i.e. it may be available for more than one airline operator (a "0" being a "No" operator). Of course, the costs involved in storing a component in a consignment pool will generally incur more expense. A "1" in Column E indicates that the component is to be incorporated in the overall "R&O" (repair and overhaul) model. In this case, all three components, i.e. PN1, PN2 and PN3 are incorporated in a central pool storage facility and in the R&O model.

Columns F to L hold data relating to the number of parts to be included as part of the maintenance system. Column F relates to the "QPA" which is the Quantity Per Aircraft. This represents the normal quantity of a particular component on an aircraft. Columns G to J indicate the actual quantity of the component on that aircraft of a fleet to be maintained. Although the project database 2 indicated that seven aircraft were to be included in the model, for ease of explanation, details of only four aircraft are shown here. It will be noted that a particular aircraft may have a different number of components fitted than what is specified in the QPA column (for example, aircraft (A/C) "2" in column H has zero PN1 components fitted, even though two are supposed to be fitted to the aircraft). This occurs since older components, having the same function but having a different part number, may be fitted on that particular aircraft. The "Qfitted" column, i.e. column K is the total number of components fitted for the model.

Columns L to O hold data relating to the age, in flying hours, of the oldest one of that particular component on each aircraft in the fleet being modelled. In other words, column L relates to the age of the oldest component of one the two components fitted to A/C 1, column M to the age of the oldest one of the two components fitted to A/C 2 and so on. Finally, column P indicates the age of the oldest component fitted to the fleet, in this case 20193 flying hours as fitted to the oldest component on A/C 2.

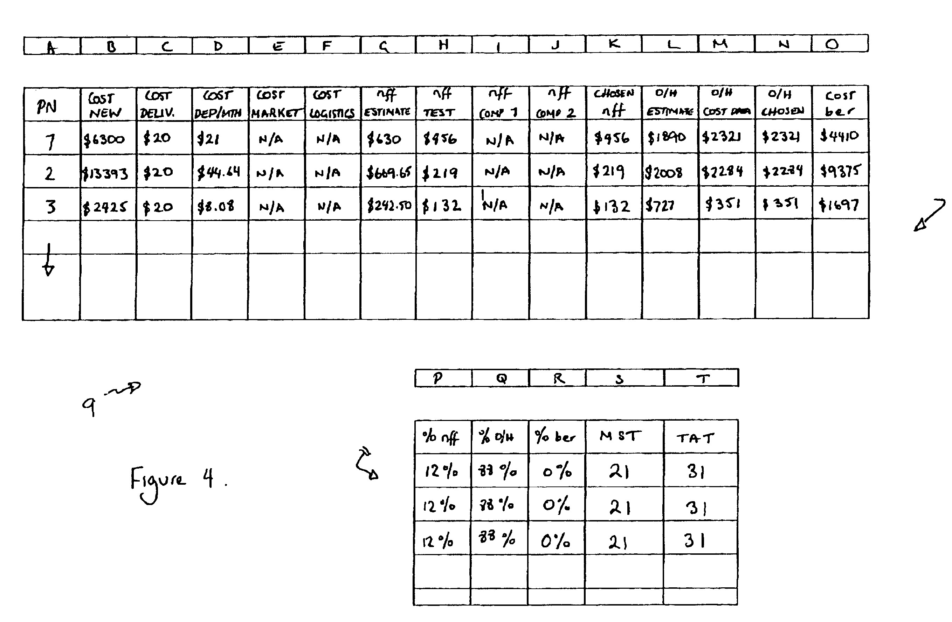

Referring to Figure 4, the component cost database 9 is shown. Column A is linked to column A of the component database, so that the corresponding part number is shown associated with relevant component cost data. The component cost data specifics up-to-date cost information relating to each of the components stored in the component database 7. The component cost information is actually divided into two main groups: columns B to F specify component cost data relating to the cost of buying a replacement component, whilst columns G to R relate to the cost of testing and repairing components.

With regard to columns B to F, column B relates to the cost of buying a new component from the OEM of that component, with column C relating to the cost of delivering the component. Column D relates to the depreciation cost per month for that component (which is relevant if a component is bought new yet not used until a later time when it is of decreased value). Column E relates to the cost of buying a refurbished component from an alternative source, providing an alternative source of component cost data. Thus the model can be configured to select the lowest component cost price. Column F relates to the logistical costs involved with acquiring the new component.

Referring now to columns G to R, three further sub-sets of data are specified, relating to the cost of testing and repairing components. Firstly, columns G to K hold data relating to the costs involved in testing the component and finding a 'No Fault Found' condition, 'NFF' (i.c. the component is removed, tested, and put back on the aircraft), columns L to N relate to the cost involved in performing an overhaul of the component, and column O relates to the costs involved in testing the component and finding a 'Beyond Economic Repair' condition, 'BER', i.e. the cost of repairing the component exceeds a specified percentage limit of the cost of buying a new component. As was mentioned previously with respect to the project database 2, the project data sets the BER level at 70%.

With respect to the 'NFF' set of data, column G holds data relating to the estimated cost of finding an 'NFF' condition as supplied by the OEM. Column H holds data relating to an alternative set of test cost data. Columns I and J holds data relating to yet more alternative cost data sources from two different component manufacturers (i.e. not the OEM). Accordingly, there are provided four separate sources of cost data relating to an 'NFF' condition being found for the particular component The choice of which source to incorporate into the model when computing the output data is predefined to be the lowest value of cost data (although, of course, any hierarchical relationship could be defined). This data is stored in column K.

As with the 'NFF' data, two sub-sets of alternative cost data are specified for performing a repair and overhaul of each component. Column L relates to estimated cost data supplied by the OEM of the component, with column M relating to actual source data. In this case, since the actual source data stored in column M is considered the most accurate, this data is selected and stored in column N.

Column O comprises cost data for testing the component and establishing that a 'BER' condition has occurred.

As will be appreciated from the above, by providing up-to-date component cost data for different types of component maintenance operations, as well as providing a plurality of sets of cost data from different sources, the most economical method of maintenance can be identified from a particular source.

Columns P to R relate to the statistical likelihood of each repair operation being required, i.e. column P relates to the likelihood of a 'NFF' condition occurring, column Q to an overhaul operation being required, and column R to a 'BER' condition occurring. As this example shows, statistically, a 'BER' condition has a zero probability of occurring. This statistical information is taken into account when calculating the cost of a repair operation. Thus, since a 'NFF' condition is likely to occur 12% of the time, and an overhaul is likely to be required 88% of the time, the required total cost of performing a repair operation may be estimated at 12% of the value given in column K (the preferred 'NFF' cost data), added to 88% of the value given in column N (the preferred overhaul cost data). Again, this relationship between the cost data is predefined in the overall model embodied by the application program 1.

Column S holds data relating to the 'Mean Shop Time' (MST) required to hold a component under repair. Column T holds data relating to the 'Turn-Around Time' (TAT) of both holding the component under repair, and of putting the component back on the aircraft. This is predefined as being the MST plus 10 days. This is reflected by the data stored in column T.

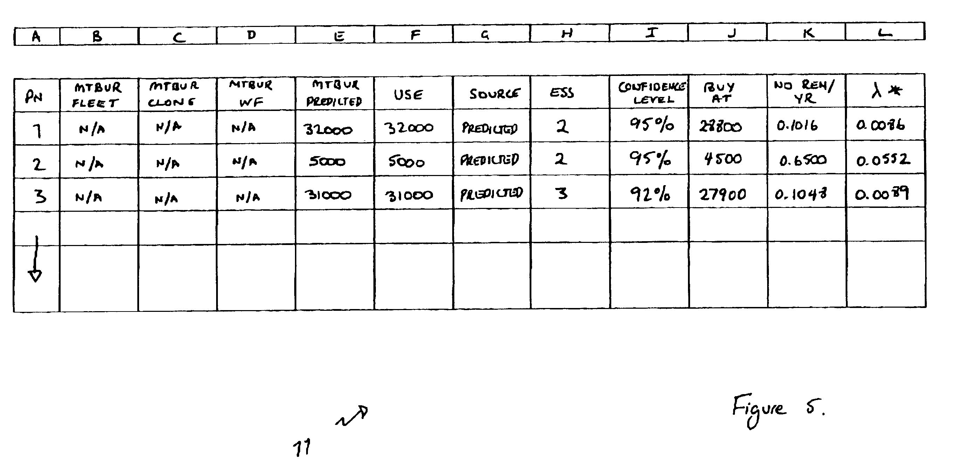

Referring to Figure 5, the reliability database 11 is shown. As with the component cost database 9, Column A of the reliability database is linked to column A of the component database 7, so that the corresponding part number is shown associated with relevant component reliability data. With it in mind that the purpose of the application program 1 is to model the predicted schedule and costs involved in an unscheduled maintenance system, predicted reliability data in the form of 'Mean Time Between Unscheduled Repair' (MTBUR) data is provided, in terms of flying hours. It will be appreciated that 'repair' also incorporates component replacement operations, as well as actual overhaul-type repair operations.

In columns B to E, four alternative sources of MTBUR data is provided for. Column B holds MTBUR test data from the actual airline operator for which the model is being used. This is generally considered the most accurate source of MTBUR data. Column C holds MTBUR data from a so-called 'clone fleet', that is, a very similar airline operator. This is considered the next-best source of data. Column D holds MTBUR data from the entire world fleet of similar airlines, whilst column E holds estimated MTBUR data, generally considered to be the least reliable data of the four sources.

Columns F and G hold data relating to the actual value and source of MTBUR data, respectively, chosen in accordance with a predefined hierarchy. As mentioned above, the MTBUR data in column B is considered the most reliable, and so, if this data is available, this will be used. In this case, no such data is available in columns B, C, or D, so the predicted data of column E is chosen. This process ensures that the most accurate source of reliability data is used in the model.

Column H holds data relating to three categories of 'essentiallity'. These categories define how critical the component is to the actual operation of the aircraft. Category 1 components are the most critical and an aircraft will not be able to operate without the component. For example, a wing member will be a category 1 component. A category 2 component is a 'go if' component, which means that provided the aircraft has one other component of the same description, then the aircraft may still operate. A category 3 component is a 'go' component, i.e. non-critical. Reading lamps or coffee makers might be examples of category 3 components.

Column I holds data relating to the required confidence level of having the component in stock in the event of a maintenance operation being required. As mentioned with regard to the project database 2, the airline operator specifies the required confidence level to be associated with each category. Accordingly, column H will be defined as holding the confidence level linked with the essentiallity category in column G, i.e. 98% for category 1 components, 95% for category 2 components, and 92% for category 3 components.

Column J holds data relating to the computed age (in terms of flying hours) at which a component should be stocked (the so-called 'buy-at' age). This value is computed on the basis of the selected MTBUR, i.e. that data which is stored in column F, multiplied by the reliability factor as specified in the project database, i.e. 0.9 (90%). Accordingly, for PN1, the selected MTBUR used is 32000 flying hours, with the 'buy-at' age being 28800 flying hours.

In column K, data relating to the computed number of removals per year is stored. This data is computed by taking the FHannual value specified in the project database 2, divided by the selected MTBUR in column F. Hence, in the case of PN1, the computed value is 0.1016.

Finally, in column L, data relating to the likelihood of a maintenance operation being required during the turnaround time for that same part is computed and stored (i.e. as λ*). In other words, this column represents the chance of a component requiring maintenance whilst the same component (which it may have replaced) is still off the aircraft. This is computed by multiplying the value in column K by the corresponding value in column T of the component cost database 9 (turn around time), all divided by 365.25 (the number of days in a year).

As mentioned previously, the output data which comprises the maintenance model is computed in accordance with a predefined computational relationship between data in the project, component, component cost and reliability databases 2, 7, 9, 11, as inputted to the output database 5 (indicated by the arrow 23). The operation of the output database 5 will now be described in detail.

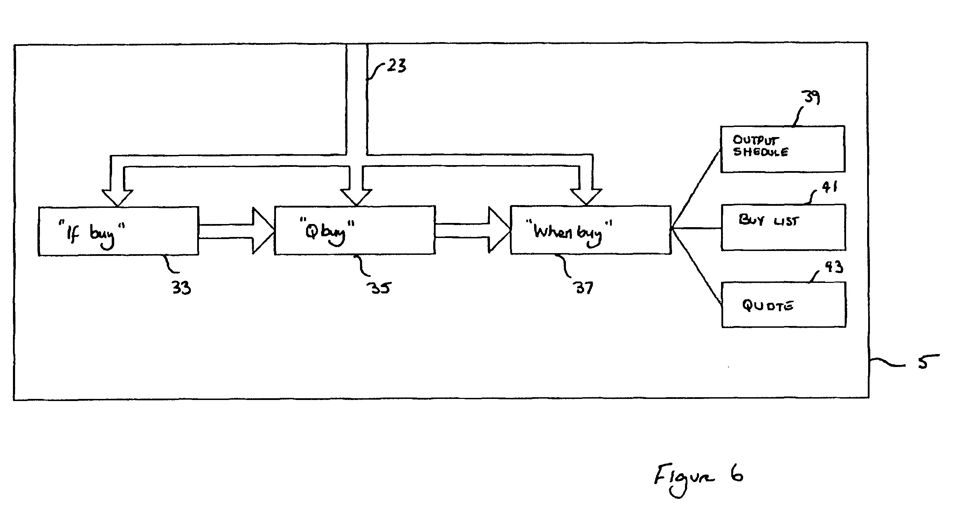

Referring to Figure 6, the output database comprises a three further databases, namely an "If buy" database 33, a "Qbuy" database 35, and a "When buy" database 37, each of which will be described in greater detail below. These three databases 33, 35, 37 arc shown in the form of a progressive chain, due to the fact that the "Qbuy" database 25 relies on data values being supplied from the "If buy" database 33, and similarly, the "When buy" database 37 relies on data values being supplied from both the "If buy" and "When buy" databases 33, 35. As the arrow 38 indicates, data from the project, component, component cost and reliability databases is inputted to the three databases 33, 35, 37, such that the final output data may be generated. This output data is generated in the form of three separate output data files, namely an "Output schedule file" 39, a "Buy list" 41 and a "Quote" 43.

The purpose of the "If buy" database 33 is to determine which components should be bought as part of the maintenance system. Indeed, one of the main technical advantages provided by the application program 1 is that components which are more likely to require maintenance can be stocked (reducing equipment 'down-time') thereby obviating the need to stock components which are unlikely to need maintenance (thereby reducing cost in terms of expense and storage). This is performed by identifying items which are (a) high risk items, i.e. components which are likely to require maintenance, and (b) required items, i.e. components which the airline manufacturer has specified to be available anyway.

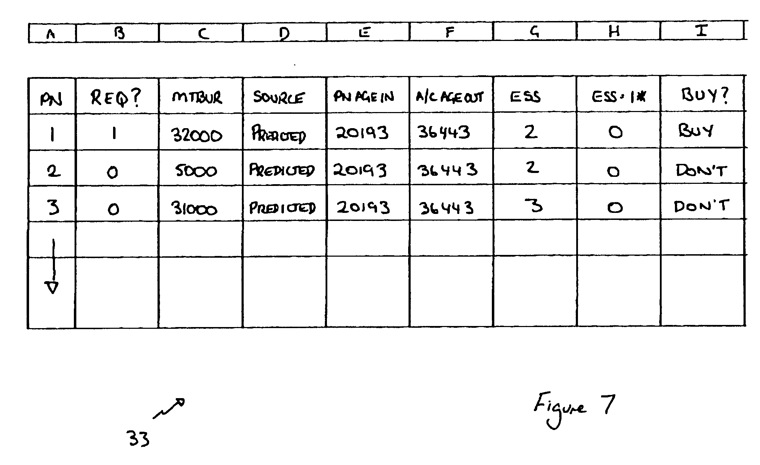

Referring to Figure 7, the "If buy" database is shown in detail. As was the case for the component, component cost, and reliability databases 7, 9, 11, the first column (column A) comprises the part number of each component, i.e. it is linked to column A of the component database 7. Column B holds a boolean value relating to whether or not the component has been specified by the airline operator as a 'required component'. In this case, PN1 has been specified as a required component, and so a '1' is entered in this column. PN's 2 and 3 are not specified as required components. Columns C and D hold the selected MTBUR and associated source data as specified in the reliability database 11 (see columns F and G in Figure 5). Column E holds data relating to the maximum age of the component corresponding to that part number at the start of the time period over which the system is used. This data is taken from the component database 7 (see column P of Figure 3). Column F holds data relating to the predicted age, in flying hours, of the component at the end of the contract period. This is computed by means of multiplying the CL/yrs and the FHannual data from the project database 2, i.e. to calculate the predicted number flying hours which the component will endure over the lifetime of the contract, and then adding this figure to the current age value stored in column E. Column G indicates the essentiallity category of the part (as specified in the reliability database 11), and column H indicates a further essentiallity category (known as Ess=1*) which is derived from the category specified in column G. For the purposes of this embodiment, the value in column H is not relevant. Finally, column I indicates whether or not the component should be acquired, i.e. bought or leased . As mentioned in the previous paragraph, the value which is computed to this column is dependant on two predefined tests. The first test deteimines whether or not the component is a high risk part. This test will output a "buy" value to column I if the MTBUR value in column C is higher than the value in column F, i.e. the predicted component age at the end of the contract period. In this case, no component is considered as being high risk. Next, even if no component is considered high risk, if the airline operator has specified that the component is required, then a "buy" value is returned. Thus, since the value in column B for PN1 is a '1', column I indicates "buy" for PN1.

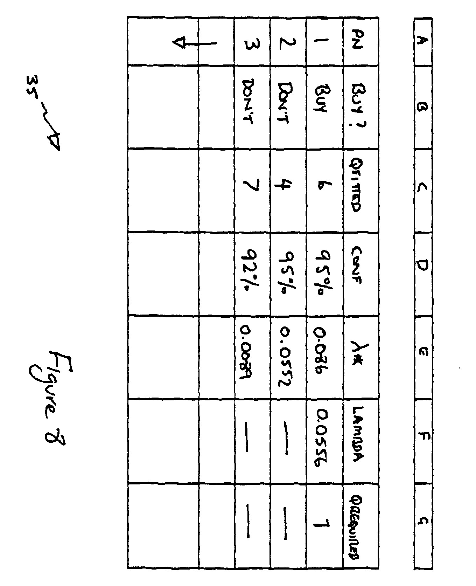

Reference is now made to the "Qbuy" database 35. Having decided that PN1 is to be bought, the next step is to determine the quantity of components to be acquired. This calculation is determined by performing a statistical analysis on a so-called 'lambda' value which is derived from the λ* value computed in the reliability database. This statistical analysis involves performing a Poisson distribution analysis to determine the number of parts required to meet the required confidence level (which, as explained above, depends on the component category). It will be appreciated by those skilled in the art that the Poisson distribution is the usual statistical analysis used in modelling component failure rates. The "Qbuy" database 35 is shown in detail in Figure 8.

Referring to Figure 8, column A indicates the part number of each component. Column B indicates the value returned in column I of the "If buy" database 33. Accordingly, "buy" is indicated for PN1, with "don't" being indicated for PN2 and PN3. Column C holds data relating to the quantity of components fitted to the fleet of aircraft, i.e. the Qfitted value from column K of the component database 7. Column D holds data relating to the required confidence level for each component, i.e. that data held in column I of the reliability database 11. Column E holds the data relating to the likelihood of a maintenance operation being required during the turnaround time for that same part (i.e. the λ* value from column L of the reliability database 11). Column F holds a so-called 'lambda' value, which is computed by multiplying the λ* value by the Qfitted value in column C. This multiplication is only performed, however, if there is a "buy" condition in column B. Accordingly, there is only one lambda value shown in the "Qbuy" database 35, i.e. for PN1. Finally, a Poisson distribution analysis is performed on the lambda value of column F in order to determine the number of components required in order to meet the confidence level specified in column D, i.e 95%. This statistical analysis results in a value of "1" PN1 component being required, and so the value of "1" is returned in column G. Although more than a single PN1 component will probably be needed during the entire lifetime of the system, this analysis means that so long as there is a single PN1 component in stock, there is a 95% likelihood that a further PN1 component will not be required during a turn-around-time of an unscheduled maintenance operation involving that single PN1 component.

Reference is now made to the "When buy" database 37. Having established that PN1 is to be acquired, and that a quantity of "1" is required to be in stock in order to meet the required confidence level, the next stage is to determine at which time in the system lifetime, the PN1 components should be acquired. This is calculated on the basis of the predicted time when the next maintenance operation will occur.

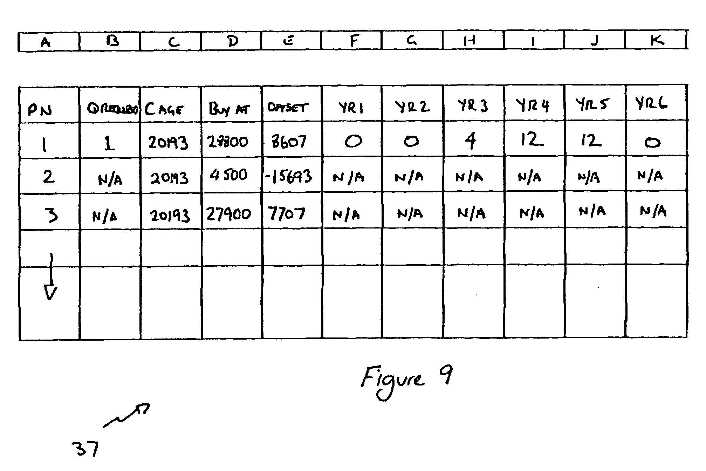

Figure 9 shows the "When buy" database 37 in detail. Referring to Figure 9, column A indicates the part number of each component. Column B indicates the quantity required for each component. Thus, the value stored in column G of the "Qbuy" database 35 is stored in column B of the "When buy" database 37 also. Column C holds data relating to the current age of the component, i.e. that value stored in column P of the component database 7. Column D holds data relating to the "Buy at" data stored in the reliability database 11. Column E holds data relating to the predicted time offset when the "Buy at" time occurs, i.e. a calculation is performed based on the "Buy at" data minus the "Current age" data in column C. In the case of PN1, this gives a predicted value of 8607 flying hours, i.e. the component should be bought in 8607 flying hours time. Given the value in column E, and knowledge of the expected number of flying hours of the aircraft having the component fitted thereon, the "When buy" database thereafter computes a schedule of when the PN1 component should be acquired. This schedule is output against each year of the contract, i.e. in columns F to K corresponding to years 1 to 6. The figure outputted to each column indicates the month when the component should be acquired, i.e. A "4" indicates April, whilst a "12" indicates December. Thus, column H indicates that a PN1 component should be acquired in April of year three of the system's lifetime, with further PN1 components being acquired in December of years 4 and 5 of the system's lifetime.

Having generated output data in the "If buy", "Qbuy" and "When buy" databases 33, 35, 37, three separate output files are generated in order to present the output data in a convenient form. As mentioned above, these three output files comprise an "output schedule file" 39, a "buy list file" 41 and a "Quote file" 43.

The output schedule file 39 provides a full breakdown of the output data over the lifetime of the system. The data from the "When buy" database 37 is cross referenced with the component cost data from the component cost database 9 to generate a breakdown of the cost involved in maintaining the required components over the lifetime of the system. Ideally, the cost is broken down to display a list of components to be ordered at different times during each year of the system, and the associated costs involved in performing this. This data is also cross-referenced with the financial data in the project database 2 to take account of the current interest rate, lease rates, inflation etc., as well as the maintenance operator's uplift on all calculated costs, to provide a fully detailed financial analysis of the system, including predicted cash flow, profit and loss etc.

The "buy list file" 41 simply provides a scheduled list of the components to be acquired at particular times during the life of the system. By cross-referencing this scheduled list of components with component cost data from the component cost database 9, particular component suppliers can be identified for future strategic alliances to produce more competitive cost data.

The "Quote file" 43 simply provides a less detailed version of the output schedule file 39. In the case where the application program 1 is used as a bidding tool for a maintenance contract, the airline operator will generally wish to see the bottom line in terms of the total cost involved, perhaps with a yearly breakdown of costs.

As mentioned previously, the data stored within the project, component, component cost, and reliability databases 2, 7, 9, 11 can be updated repeatedly. For example, an airline operator may wish to enter different values in the project database 2 in order to determine the total cost incurred. This gives the application program 1 flexibility in that the airline operator is able to rapidly evaluate a large number of scenarios and system permutations. As new components come onto the market, data relating to these components is updated in the component database 7. Different sources of cost and reliability data is also entered in the component cost database 9 and reliability database 11 as soon as the new data becomes available. Thus, up-to-date cost and reliability data is incorporated during the system lifetime, thus incorporating feedback in the model and so improving the accuracy of the output data generated by the model. Since the overall output data generated by the model is produced in accordance with a set of predefined computational relationships, any data update operation is automatically accounted for in the overall application program. Thus, each set of generated output data is based on an entirely new computation, rather than being a mere alteration of a previous computation. Accuracy and flexibility is therefore provided.

In a particularly preferred feature of this embodiment, updated data for the component cost and reliability databases 9, 11, is inputted by means of a data link between two remote computer systems (not shown). A first computer system sources up-to-date component cost data for direct downloading to the component cost database 9 via an Internet connection. Similarly, a second computer system sources up-to-date reliability data for direct downloading to the reliability database 11 via an Internet connection.

The application program 1 may itself be provided as part of an on-line computer system. That is, third parties, such as airline operators, will be able to access the application program via a network connection, e.g. over the Internet. The application program will incorporate a browser-type interface allowing only data in the project database 2 to be manipulated. By entering different variables in the project database, the airline operator will be able to quickly assess the resulting maintenance schedule, e.g. in terms of storage required and cost.

Finally, it will be understood that the system described may be used to model various types of maintenance-related system. For example, the application program 1 could be adapted to model aircraft line maintenance, maintenance training, heavy maintenance and engine maintenance systems (in the latter case, the main variable being log cards, rather than component part numbers).

## Claims

1. A method of modelling a maintenance system, the method comprising: providing a computer system having a component database and a reliability database; inputting, to the component database, component data relating to the status of one or more components to be maintained as part of the maintenance system; inputting, to the reliability database, reliability data relating to the predicted performance of at least one component represented by the component data in the component database; and computing, in accordance with a predefined relationship between the component and reliability data, output data representing a maintenance prediction relating to said at least one of the components.

2. A method according to claim 1, wherein the reliability database comprises two or more sub-sets of reliability data, the step of computing the output data including accessing only one of the reliability data sets in accordance with a predetermined hierarchical rule.

3. A method according to claim 2, wherein the reliability database includes one sub-set relating to the estimated reliability of the at least one component, a further sub-set being empirical reliability data for the at least one component.

4. A method according to any preceding claim, wherein the component data relates to the current age or length of service of the at least one component represented in the component database, and the reliability data includes data relating to the predicted age or length of service at which the at least one component will require maintenance.

5. A method according to any preceding claim, wherein the computed output data is outputted to an output database in the form of a maintenance schedule, the maintenance schedule relating to the predicted time at which one or more of the components represented in the component database will require maintenance.

6. A method according to any preceding claim, further comprising providing a component cost database, and inputting cost data, relating to the cost of maintaining and/or storing one or more components represented in the component database, to the component cost database, the output data being computed in accordance with a predefined relationship between the cost data, and the component data and/or the reliability data.

7. A method according to claim 6, wherein the component cost database comprises one or more sub-set(s) of cost data, the step of computing the output data including accessing only one of the cost data sets in accordance with a predetermined hierarchical rule.

8. A method according to claim 6, wherein the component cost database comprises a plurality of sub-sets of cost data relating to mutually exclusive maintenance operations, and statistical data relating to the likelihood of each maintenance operation being required, the step of computing the output data including performing a cost calculation based on the likelihood of each maintenance operation being required,

9. A method according to any of claims 6 to 8, wherein the computed output data is outputted to an output database in the form of a maintenance schedule, the maintenance schedule relating to the predicted time at which one or more of the components represented in the component database will require maintenance, and the associated cost required to maintain and/or store the components over a period of time covered by the maintenance system.

10. A method according to any preceding claim, the method further comprising providing a project database on the computer system, and inputting project data associated with one or more parameters defining the maintenance system, to the project database, the output data being computed in accordance with a predefined relationship between the project data and the component, cost and/or reliability data.

11. A method according to any preceding claim, the method further comprising providing updated data to one or more of the databases of the computer system during the period of time covered by the maintenance system.

12. A method according to claim 11, wherein the updated component and/or reliability data is periodically downloaded to the computer system from a further computer system by means of a network link.

13. A method according to claim 12, wherein the network link is established over the Internet.

14. A method of modelling an aircraft maintenance system in accordance with any preceding claim.

15. A computer program stored on a computer usable medium, the computer program comprising an application including a component database and a reliability database, the application further comprising computer readable instructions for causing the computer to execute the steps of: prompting a user to enter component data relating to the status of one or more components to be maintained as part of a maintenance system; prompting a user to enter reliability data, associated with at least one component represented in the component database, to the reliability database; and computing, in accordance with a predefined relationship between the component and reliability data, output data relating to the predicted maintenance of at least one of the components.

16. A system for modelling a maintenance project, comprising a computer having a processing means, and an application program stored on a memory of the computer, wherein the application program includes: a component database for storing component data relating to the status of one or more components to be maintained as part of the maintenance project; and a reliability database for storing reliability data relating to the predicted performance of at least one component represented by the component data in the component database, the processing means being arranged to compute, in accordance with a predefined relationship between the component and reliability data, output data relating to the predicted maintenance of at least one of the components.

17. A system according to claim 16, wherein the reliability database comprises two or more sub-sets of reliability data.

18. A system according to claim 17, wherein one sub-set of reliability data relates to the estimated reliability of the at least one component, and a second sub-set is empirical reliability data for the at least one component.

19. A system according to any of claims 16 to 18, wherein the application program further comprises a project database for storing project data relating to one or more parameters defining the maintenance project.

20. A system according to any of claims 16 to 19, wherein the application program further comprises a component cost database for storing cost data relating to the cost of maintaining and/or storing one or more components represented in the component database.

21. A system according to any of claims 16 to 20, wherein the computer is networked to a further computer, which further computer is arranged to download updated data to the databases of the computer.

22. A system for modelling an aircraft maintenance project in accordance with any of claims 16 to 21.

23. A method of modelling a maintenance system, the method being substantially as hercinbefore described with reference to the accompanying drawings.

24. A maintenance modelling system substantially as hereinbefore described and shown with reference to the accompanying drawings.
